# DEMANDE DE BREVET EUROPEEN

(11) **EP 1 596 304 A1**
(43) Date de publication de la demande: **16.11.2005**
(21) Numéro de dépôt: 05102707.6
(22) Date de dépôt: 06.04.2005
(51) Int. Cl.: G06F 12/06

(54) **Réseau informatif utilisant un système sécurisé d'identification de noeuds**

(30) Priorité: 14.05.2004 FR 0405323
(71) Demandeur: Valeo Systèmes Thermiques, 78321 Le Mesnil St Denis Cedex (FR)
(72) Inventeur: Talaucher, Stéphane VALEO SYSTEMES THERMIQUES, 78321, LE MESNIL ST DENIS CEDEX (FR); Puzenat, Bertrand VALEO SYSTHEMES THERMIQUES P.I., 78321, LE MESNIL ST DENIS CEDEX (FR); Chauvin, Karen VALEO SYSTEMES THERMIQUES P.I., 78321, LE MESNIL ST DENIS CEDEX (FR); Virey, Daniel VALEO SYSTEMES THERMIQUES P.I., 78321, LE MESNIL ST DENIS CEDEX (FR); Laurenceau, Paul VALEO SYSTEMES THERMIQUES P.I., 78321, LE MESNIL ST DENIS CEDEX (FR)

(57) **Abrégé**

Réseau informatif comprenant au moins un périphérique (10₁, 10₂,...,10ₙ) connecté à un noeud (N₁, N₂,..., Nₙ) dudit réseau, ledit noeud étant identifié au moyen d'un système résistif (130 ; 130a, 130b) connecté à un conducteur commun (14, 16, 18) du réseau informatif.

Selon l'invention, ledit système résistif comprend un élément résistif (130 ; 130a) intégré audit conducteur commun, le périphérique étant disposé en parallèle sur ledit élément résistif intégré.

Application aux installations de climatisation dans les véhicules automobiles.

## Description

La présente invention concerne un réseau informatif utilisant un système résistif d'identification de noeuds.

L'invention trouve une application particulièrement avantageuse, mais non limitative, dans le domaine des installations de climatisation dans les véhicules automobiles, et plus spécialement dans celui de l'affectation d'adresses à des périphériques connectés sur les noeuds d'un réseau informatif.

La demande internationale PCT/FR02/00676 décrit, dans une installation de climatisation de véhicules par exemple, un réseau informatif relié à une unité centrale de commande et à une pluralité de périphériques reliés à des noeuds du réseau, les périphériques étant connectés en série via un conducteur commun du réseau informatif.

Dans le cadre de la climatisation de véhicules, les périphériques peuvent être des actionneurs de distribution ou de mixage d'air, des pulseurs ou encore des capteurs de température. Ces divers équipements sont reliés à l'unité centrale de commande pour recevoir des informations de commande et/ou lui transmettre des informations d'état.

C'est pour fournir une identification des noeuds du réseau informatif permettant d'éviter une différenciation permanente entre périphériques d'un même type, que la demande internationale précitée propose un procédé qui consiste, au niveau de chaque périphérique, à injecter, par exemple, un courant électrique sur le conducteur commun du réseau et à détecter au moyen d'un système résistif connecté au conducteur commun, un shunt notamment, un signal électrique dépendant des courants électriques injectés par les périphériques situés en amont.

Des moyens sont alors prévus pour générer, à partir du courant détecté, une information de position relative au périphérique et pour identifier le noeud du réseau auquel il est connecté à partir de l'information de position relative ainsi générée. L'identification du noeud de réseau informatif permet l'affectation d'une adresse ou un contrôle de montage du périphérique, à partir de l'unité centrale de commande.

Cependant, s'ils offrent de nombreux avantages en terme d'identification des noeuds, les réseaux informatifs construits sur les recommandations prescrites dans la demande internationale mentionnée plus haut présentent l'inconvénient d'être sensibles à la déconnexion ou l'absence de connexion d'un périphérique sur un noeud donné du réseau informatif.

En effet, en cas d'absence d'un périphérique ou si un périphérique est mal connecté au conducteur commun, tous les périphériques situés à des noeuds de connexion en aval du périphérique défaillant ou absent se trouvent déconnectés du réseau informatif et, de ce fait :
- ne peuvent plus communiquer avec l'unité de commande du réseau, si le système résistif est placé sur le bus d'information en tant que conducteur commun. Par contre, les périphériques déconnectés seront toujours alimentés et pourront donc entrer dans un mode de sécurité.
- ne sont plus alimentés, si le système résistif est placé sur un des conducteurs d'alimentation (masse ou point haut) en tant que conducteur commun. Aucun périphérique situé en aval n'est fonctionnel et ne peut donc se mettre en position de sécurité.

Aussi, le problème technique à résoudre par l'objet de la présente invention est de proposer un réseau informatif comprenant au moins un périphérique connecté à un noeud dudit réseau, ledit noeud étant identifié au moyen d'un système résistif connecté à un conducteur commun du réseau informatif, qui permettrait d'assurer la continuité des fonctions du réseau même si un périphérique est déconnecté ou mal connecté au noeud correspondant.

La solution au problème technique posé consiste, selon la présente invention, en ce que ledit système résistif comprend un élément résistif intégré audit conducteur commun, le périphérique étant disposé en parallèle sur ledit élément résistif intégré.

Ainsi, on comprend que la présence dudit élément résistif intégré au conducteur commun permet d'obtenir une continuité électrique entre l'amont et l'aval du noeud correspondant au périphérique manquant ou mal connecté. En particulier, les périphériques situés en aval de ce périphérique défaillant pourront continuer à être alimenter ou recevoir les informations circulant sur le bus d'information.

On notera également un avantage essentiel de l'invention consistant dans le fait que la spécification d'identification des noeuds reste inchangée.

Selon un premier mode de réalisation de l'invention, ledit système résistif comprend un élément résistif unique.

Selon un deuxième mode de réalisation de l'invention, ledit système résistif comprend en outre un second élément résistif intégré audit périphérique, disposé en parallèle sur l'élément résistif intégré au conducteur commun.

La description qui va suivre en regard des dessins annexés, donnés à titre d'exemples non limitatifs, fera bien comprendre en quoi consiste l'invention et comment elle peut être réalisée.

La figure 1 est un schéma d'un premier mode de réalisation d'un réseau informatif conforme à l'invention.

La figure 2 est un schéma d'un deuxième mode de réalisation d'un réseau informatif conforme à l'invention.

La figure 3 est une variante de réalisation du schéma de la figure 1.

La figure 4 est une variante de réalisation du schéma de la figure 2.

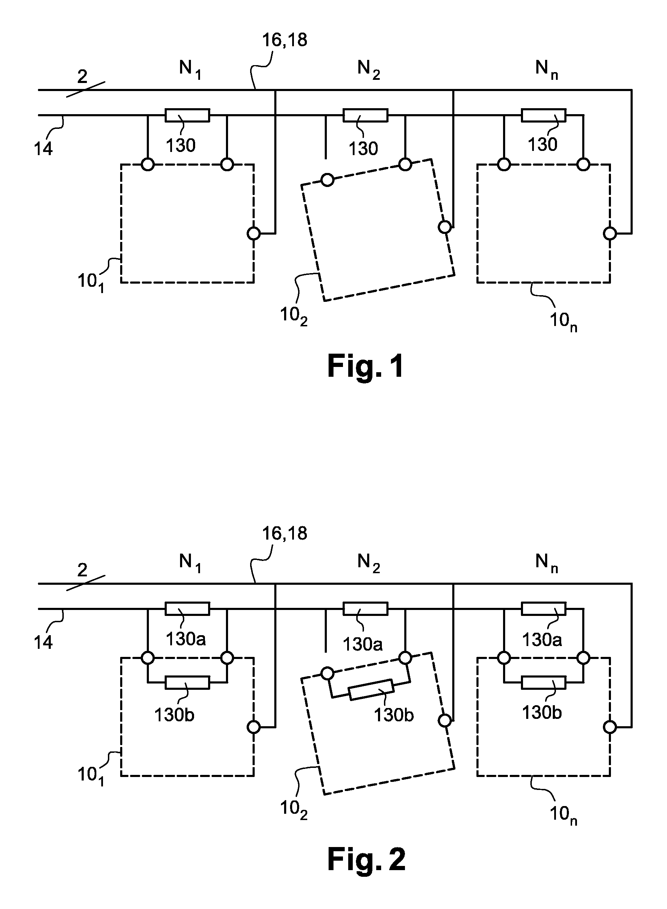

Sur la figure 1 est représenté un réseau informatif, tel qu'une installation de climatisation d'un véhicule automobile, comprenant une pluralité de périphériques 10₁, 10₂,...,10ₙ connectés respectivement à des noeuds N₁, N₂,..., Nₙ du réseau.

Chaque périphérique est relié à des conducteurs 16, 18 d'alimentation électrique (masse, point haut) qui, dans l'exemple de la figure 1, sont représentées confondus. Les informations circulant entre les périphériques 10₁, 10₂,...,10ₙ et une unité de commande, non représentée, sont transportées par un bus 14 d'information du réseau informatif.

Les noeuds N₁, N₂,..., Nₙ sont identifiés conformément au procédé décrit dans la demande internationale PCT/FR02/00676 et dont on rappellera seulement ici qu'il met en oeuvre pour chaque périphérique un système résistif connecté à un conducteur commun du réseau.

Dans le mode de réalisation de la figure 1, ledit conducteur commun est constitué par le bus 14 d'information et le réseau résistif comprend un élément résistif unique 130 intégré au bus 14 à chaque noeud du réseau et non au périphérique correspondant comme dans la demande internationale précitée. L'élément résistif 130 peut être un shunt analogue à celui décrit dans cette même demande internationale. De manière pratique, ce shunt est réalisé par exemple au moyen d'une résistance CMS ou d'une résistance piquée de faible valeur et de grande précision.

Il ressort de la configuration montrée sur la figure 1 qu'en cas de mauvaise connexion d'un périphérique, par exemple le périphérique 10₂ sur le noeud N₂, sur l'une des connexions de l'élément résistif 130, aucune rupture de communication ne peut se produire envers les périphériques situés en aval, tels que le périphérique 10ₙ. Il en est de même si le périphérique 10₂ n'est pas connecté au réseau informatif.

Le mode de réalisation de la figure 2 diffère de celui de la figure 1 en ce qu'outre l'élément résistif 130a intégré au conducteur commun 14, le système résistif de chaque périphérique 10₁, 10₂,...,10ₙ comprend également un second élément résistif 130b intégré à chaque périphérique et disposé en parallèle sur le premier élément résistif 130a.

Dans ce mode de réalisation particulier, le premier élément résistif 130a est dit de sécurité, tandis que le premier 130b est dit fonctionnel.

On comprend que, de manière analogue à celui de la figure 1, le mode de réalisation de la figure 2 assure, en cas de mauvaise connexion du périphérique 10₂ par exemple, la continuité de la transmission d'information, via l'élément 130a de sécurité, vers les périphériques aval tel que le périphérique 10ₙ. Il en est également de même si le périphérique 10₂ n'est pas connecté au réseau informatif.

Par contre, le réseau de la figure 2 présente l'avantage par rapport à celui de la figure 1 d'éviter toute rupture de communication en cas déconnexion de l'élément 130a de sécurité lui-même, la continuité de transmission de l'information étant alors assurée par l'élément résistif fonctionnel 130b.

De manière à ce que l'identification des noeuds N₁, N₂,..., Nₙ ne dépendent que de la valeur de l'élément résistif fonctionnel 130b des périphériques 10₁, 10₂,...,10ₙ , on peut prévoir que l'élément résistif 130a de sécurité ait une valeur sensiblement supérieure à celle de l'élément fonctionnel 130b.

Dans ce cas, la précision sur la valeur de l'élément 130a de sécurité n'est pas déterminante, ce qui permet d'envisager une large gamme de solutions technologiques pour la réalisation de cet élément. En particulier, l'élément 130a de sécurité peut être une résistance piquée sertie à une extrémité avec le conducteur entrant et à l'autre extrémité avec le conducteur sortant. D'autres réalisations sont encore possibles comme une résistance constituée d'une longueur calibrée d'un matériau mauvais conducteur.

Ce dernier avantage fait du mode de réalisation de la figure 2 une solution moins chère que celle proposée à la figure 1.

En effet, le mode de réalisation avec élément de sécurité n'exige pas de connaître la résistance de cet élément avec une grande précision, contrairement à l'élément fonctionnel. A l'inverse, le mode de réalisation avec un seul élément résistif dans le réseau est plus complexe à mettre en oeuvre car dans ce cas une grande précision doit être obtenue pour un élément résistif qui n'est pas dans un périphérique mais dans le réseau.

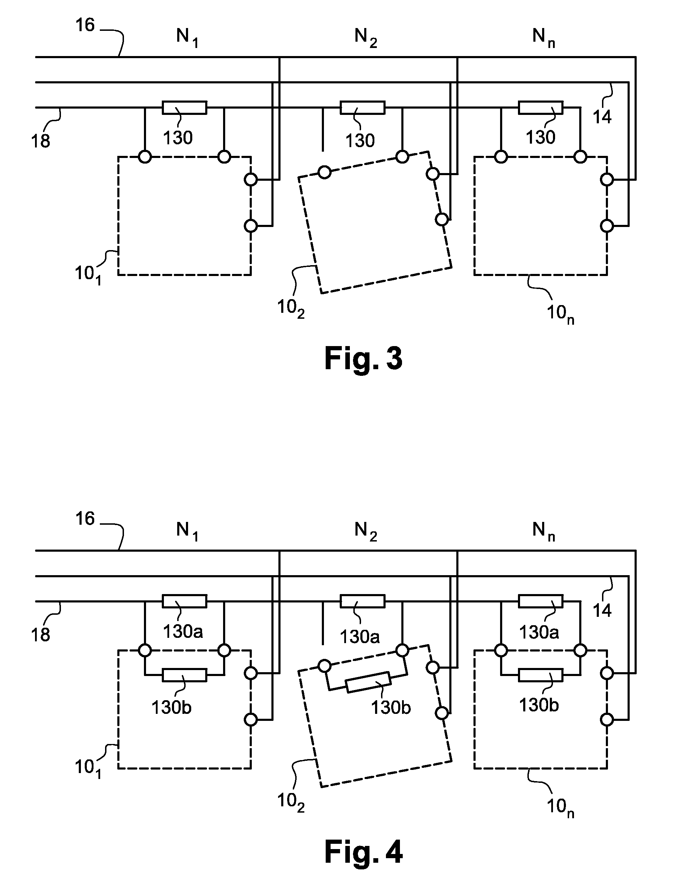

Les figures 3 et 4 sont des variantes de réalisation respectives des figures 1 et 2 dans lesquelles ledit conducteur commun est un conducteur d'alimentation, ici le conducteur 18.

On peut voir sur les figures 3 et 4 qu'en cas de mauvaise connexion du périphérique 10₂ sur le conducteur 18, les périphériques en aval, comme le périphérique 10ₙ, restent alimentés, ce qui est une condition nécessaire pour entrer en mode de sécurité en cas de perte de communication. Il en est de même si le périphérique 10₂ n'est pas connecté au réseau informatif.

L'avantage du mode de réalisation de la figure 4 par rapport à celui de la figure 3 est d'éviter toute perte de communication en cas de rupture de l'élément résistif 130a de sécurité, les informations pouvant alors circuler via l'élément résistif 130b intégré au périphérique.

## Revendications

1. Réseau informatif comprenant au moins un périphérique (10₁, 10₂,...,10ₙ) connecté à un noeud (N₁ , N₂,..., Nₙ) dudit réseau, ledit noeud étant identifié au moyen d'un système résistif (130 ; 130a, 130b) connecté à un conducteur commun (14, 16, 18) du réseau informatif, **caractérisé en ce que** ledit système résistif comprend un élément résistif (130 ; 130a) intégré audit conducteur commun, le périphérique étant disposé en parallèle sur ledit élément résistif intégré.

2. Système selon la revendication 1, **caractérisé en ce que** ledit système résistif comprend un élément résistif unique (130).

3. Système selon la revendication 1, **caractérisé en ce que** ledit système résistif comprend en outre un second élément résistif (130b) intégré audit périphérique, disposé en parallèle sur l'élément résistif (130a) intégré au conducteur commun.

4. Système selon la revendication 3, **caractérisé en ce que** l'élément résistif (130a) intégré au conducteur commun a une valeur sensiblement supérieure à la valeur du second élément résistif (130b).

5. Système selon l'une quelconque des revendications 1 à 4, **caractérisé en ce que** ledit conducteur commun est un conducteur (14) d'un bus d'information du réseau informatif.

6. Système selon l'une quelconque des revendications 1 à 4, **caractérisé en ce que** ledit conducteur commun est un conducteur (16, 18) d'alimentation dudit périphérique.
